# EUROPEAN PATENT APPLICATION

(11) **EP 1 930 130 A1**
(43) Date of publication of application: **11.06.2008**
(21) Application number: 06125599.8
(22) Date of filing: 07.12.2006
(51) Int. Cl.: B25J 9/10

(54) **Industrial robot comprising an extended transmission shaft**

(71) Applicant: ABB AB, 721 83 Västerås (SE)
(72) Inventor: Ellqvist, Staffan, 722 43 Västerås (SE); Jonsson, Ingvar, 723 49 Västerås (SE)

(57) **Abstract**

A manipulator comprising a robot part (1) arranged to support a first robot arm (2). The first robot arm (2) is arranged pivoting around a first axis of rotation (I) in a first joint (3) connected to the robot part (1). The first robot arm (2) is arranged to support a second robot arm (4) and the second robot arm (4) is arranged pivoting in relation the first robot arm (2) around a second axis of rotation (II) in a second joint (5) attached to the first robot arm (2). The manipulator further comprises a drive device (6) for pivoting the second robot arm (4) around the second axis of rotation (II). The drive device (6) is comprised in the first robot arm (2) and arranged in the vicinity of the first joint (3). A gear transmission means (7) is arranged to transmit rotational movement of an outgoing drive shaft (8) comprised in the drive device (6) to a pivoting movement of the second arm (4).

## Description

### TECHNICAL FIELD

The present invention relates to an industrial robot comprising a manipulator and a control unit.

### BACKGROUND ART

An industrial robot comprises a manipulator and a control unit. As an example, a six axis industrial robot comprises a foot fixed to a base and a stand, which is arranged pivoting around a first axis of rotation on the base. The stand supports a first robot arm arranged pivoting around a second axis of rotation. A second arm is arranged pivoting around a third axis of rotation in a joint at the outer end of the first arm. This second arm is arranged rotating about its own longitudinal axis (fourth axis of rotation) and supports, at its outer end, a robot wrist. The wrist provides two degrees of freedom (fifth and sixth axis of rotation) and is provided with a turn table comprising a tool attachment.

Drive devices for each axis of rotation are comprised in the robot to achieve movements of the mentioned robot arms and the wrist. Each such drive device comprises an electrical motor and a reduction gear with a high gear ratio. Power supply and control of an industrial robot of the kind described above and a tool attached on the turn table are arranged through supply and control equipment partly comprised in a control unit.

During operation of an industrial robot, gravitational forces act on the robot arms. These forces generate a torque and consequently a load on each drive device. Both an electrical motor and a reduction gear, as defined above, develop strong heat under the mentioned load. There is a close relation between the degree of torque load on a drive device and the development of heat therein. The drive devices mentioned above, each comprises a number of electronic components. These components are heat sensitive and there is a risk that they will be damaged if the temperature is raised too high. One way of limiting this heat problem is to decrease the torque load on the drive device.

When considering a manipulator, as mentioned above, the total torque load on a drive device correspond to the actual moving mass, which comprises the handling weight applied to the robot wrist as well as the weight of the moving robot arms.

The document EP 0 658 405 B1 (Figure 8) teaches an industrial robot (7) is provided with a plurality of elements (8-12) articulated to each other, whose rotation is driven by respective electric motors (23, 39, 51) by means of reduction gear units which are integrated in the structure of these elements (8-12).

This design is very expensive and further has a negative impact on the working envelope of a robot. Thus, there is need for a cost effective and flexible robot design providing a large working envelope.

### SUMMARY OF THE INVENTION

It is an object of the invention is to provide a manipulator, which eliminates the drawbacks mentioned above.

According to an aspect of the present invention, there is provided an industrial robot comprising a manipulator with a robot stand arranged to support a first robot arm. The first robot arm is arranged pivoting around a first axis of rotation in a first joint connected to the robot part. The first robot arm is arranged to support a second robot arm, which is arranged pivoting in relation the first robot arm around a second axis of rotation in a second joint attached to the first robot arm. A drive unit is arranged for pivoting the second robot arm. The drive unit is comprised in the first robot arm and arranged in the vicinity of the first joint. A gear transmission means is arranged to transmit rotational movement of an outgoing drive shaft comprised in the drive unit to a pivoting movement of the second arm.

Further developments of the invention are characterized by the features of the independent claims.

According to the invention, the drive devices are located on the robot, where they are preferably arranged near each individual drive means. A drive device is applied on the manipulator such that the heat developed from the drive device may be diverted to the manipulator structure. The heat developed from the drive device may be diverted to the manipulator structure and also be transferred to the surrounding air by convection.

In the embodiments mentioned, a drive device arranged to pivot the second robot arm is comprised in the first robot arm. The drive device is comprised in the first robot arm and is arranged in the vicinity of a first joint. The feature "comprised in the first robot arm" is defined as arranged on either side of the first robot arm i.e. any place on the inside or outside of the first robot arm and attached to the first robot arm.

In an embodiment, the first and the second axis of rotation of a manipulator are arranged in parallel.

In an embodiment, a gear transmission means comprises an extended shaft with a first and a second gear means in a first and second end, respective of the extended shaft. It is possible to design the first and second gears independently of each other as long as they provide the same rotational movement speed.

In all embodiments, an extended shaft of a transmission means is attached to a manipulator in any suitable way not described in detail.

In an embodiment, a gear transmission means comprises an extended shaft with a first and a second gear means in a first and second end, respective of the extended shaft. Further, the gear transmission means comprises at least one gear unit.

In an embodiment, the longitudinal axis of the extended shaft is arranged to make an angle α with the first and second axis of rotation.

In an embodiment, the axis of rotation of the drive shaft coincides with the axis of rotation of a first joint.

In an embodiment, the axis of rotation of the drive shaft is arranged with an offset Δx in relation to the axis of rotation of a first joint.

In an embodiment, the axis of rotation of a motor axle is arranged inclined relative to the first axis of rotation of a manipulator.

In an embodiment, a first gear unit is arranged mechanically between and connecting a drive shaft and a third gear means comprised in a gear transmission.

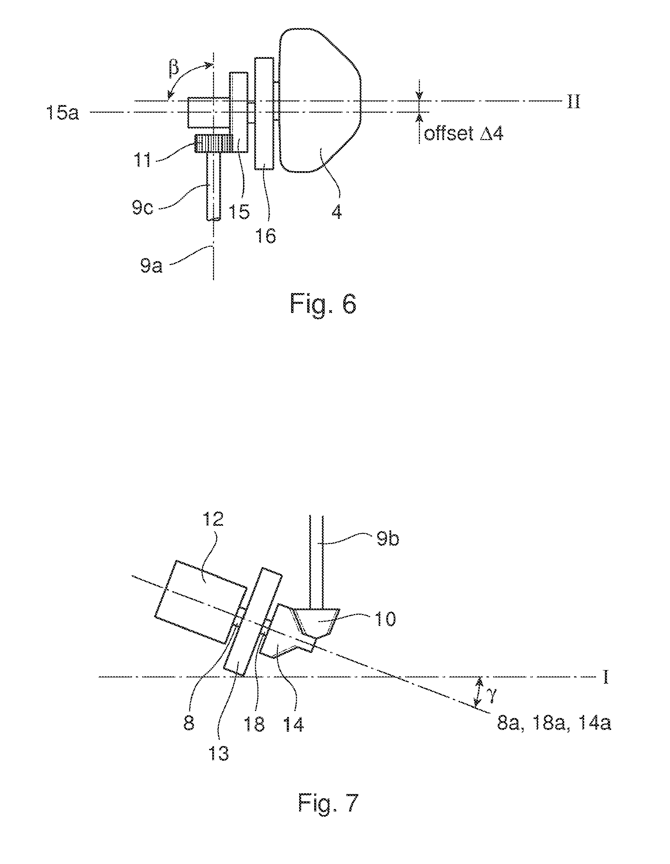

The feature "arranged mechanically between and connecting" is defined as a mechanically rigid design with e.g. a first gear unit 13 arranged physically between a drive shaft 8 and a third gear means 14. The first gear unit 13 is arranged meshing with gears on the outgoing drive shaft 8. The gear unit 13 is also arranged meshing with the third gear means 14 (Figure 7). Accordingly, the first gear is "connecting" the drive shaft 8 and the third gear means 14 through transmitting a rotational movement of the shaft 8 to a different rotational movement of the third gear means 14.

A gear unit is defined to comprise an input gear and an output gear. The feature "gear unit" is defined to comprise any kind of transmission gear, reduction gear, compact gear and cycloidal gear. The details of this unit are not mentioned in this context, it is considered an gear design choice.

In an embodiment, a third gear means is arranged meshing with a first gear means.

In an embodiment, a second gear means is arranged meshing with a fourth gear means arranged connected to a second joint.

In an embodiment, a second axis of rotation coincides with the axis of rotation of a fourth gear means.

In an embodiment, the axis of rotation of a fourth gear means is arranged offset Δy and in parallel with the second axis of rotation of a manipulator.

In an embodiment, a second gear unit is arranged mechanically between and connecting a fourth gear means and the second axis of rotation of a manipulator, in accordance with the definition above.

In each embodiment mentioned above, a manipulator either comprises a balancing unit or is balanced through regulating the torque of at least one drive device comprised in the manipulator. In a manipulator lacking a balancing unit, the working envelope of the manipulator is relatively large compared to a manipulator comprising a balancing unit.

The design according to the aspect results in a lowering of the centre of gravity of a manipulator. Thus, in turn reduces the moving mass, the gravitational forces, the generated torque, the torque load and the development of heat as mentioned above. Accordingly, it provides a possibility to reduce the size of the manipulator keeping the same working envelope and the same handling weight applied to the root wrist.

### BRIEF DESCRIPTION OF THE DRAWING

Figure 1 is an industrial robot according to the present invention,
Figure 2 is a side view of an industrial robot according to the present invention,
Figure 3 is a schematic view of a gear transmission
Figure 4 is a gear transmission and a drive unit in detail,
Figure 5 is a gear transmission and a drive unit in detail,
Figure 6 is a gear transmission and a drive unit in detail,
Figure 7 is a gear transmission and a drive unit in detail,

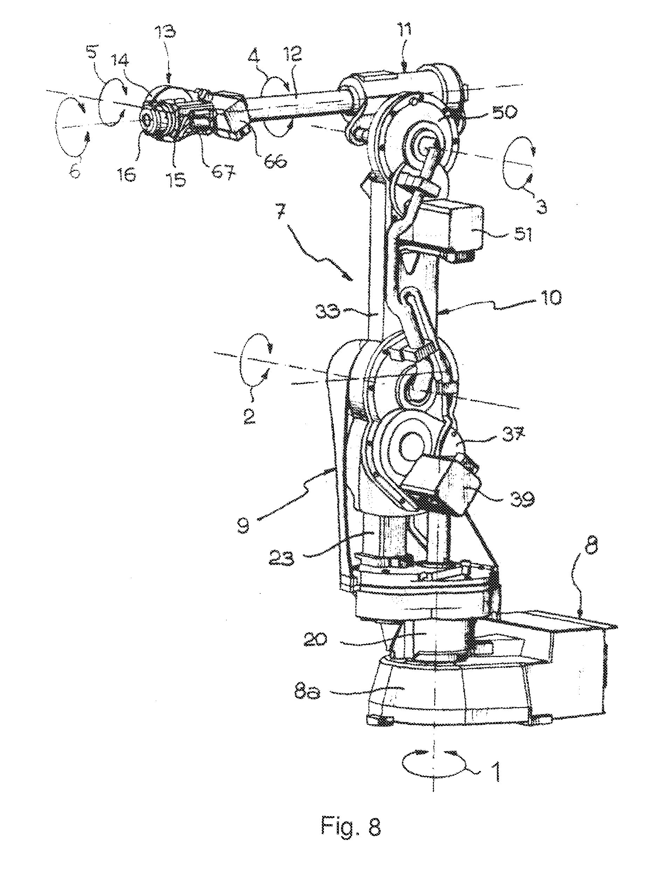

Figure 8 is prior art.

### DESCRIPTION OF EMBODIMENTS

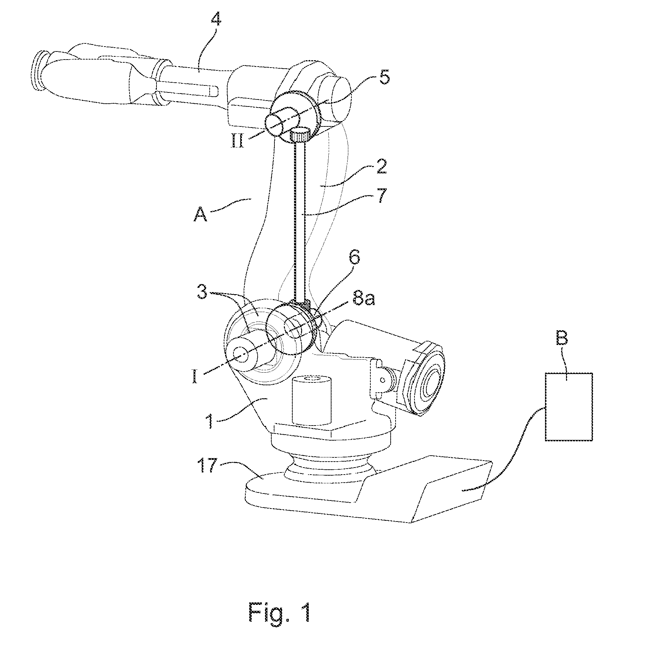

**Figure 1** is an industrial robot comprising a manipulator A and a control unit B. The manipulator A comprises a robot foot 17, a stand 1 arranged pivoting on the robot foot 17 and a first robot arm 2 connected to a joint 3 on the stand 1.
The first robot arm 2 is arranged pivoting around a first axis of rotation I in the joint 3. The first arm 2 supports a second robot arm 4 arranged pivoting around a second axis of rotation II in a joint 5 at the outer end of the first arm 2. The first 2 and the second arm 4 are arranged for relative movement during operation of the robot.
In Figure 1, the first I and second axis of rotation II are arranged in parallel.

Drive means 6 are arranged pivoting the second robot arm 4 around the second axis of rotation II. The drive means 6 is comprised in the first robot arm 2 and is arranged in the vicinity of the first joint 3. A gear transmission means 7 is arranged to transmit rotational movement of an outgoing drive shaft 8 comprised in the drive means 6 to a pivoting movement of the second arm 4.

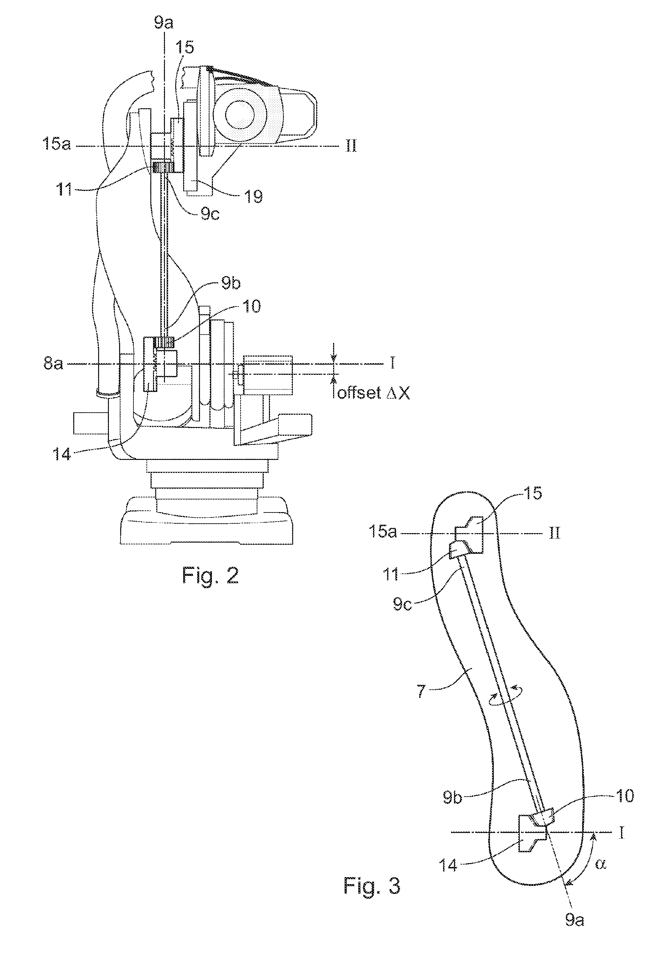

**Figure 2** is a gear transmission means 7 comprising an extended shaft 9 with a first gear means 10 arranged in a first end 9b and a second gear means 11 arranged in a second end 9c, respective of the extended shaft 9. The longitudinal axis 9a of the extended shaft 9 is arranged to make an angle α with the first and second axis of rotation and the angle α is 90°.
The axis of rotation 8a of the drive shaft 8 is arranged with an offset Δx in relation to the first axis of rotation I.

**Figure 3** is a gear transmission means 7 comprising an extended shaft 9, with a longitudinal axis 9a, which is arranged to make an angle α with the first and second axis of rotation. A third gear means 14 is arranged meshing with the first gear means 10. A second gear means 11 is arranged meshing with a fourth gear means 15. The arrangement of the gears 11, 15 is reversed in relation to gears 14, 10. The second axis of rotation II coincides with the axis of rotation 15a of the fourth gear means 15.

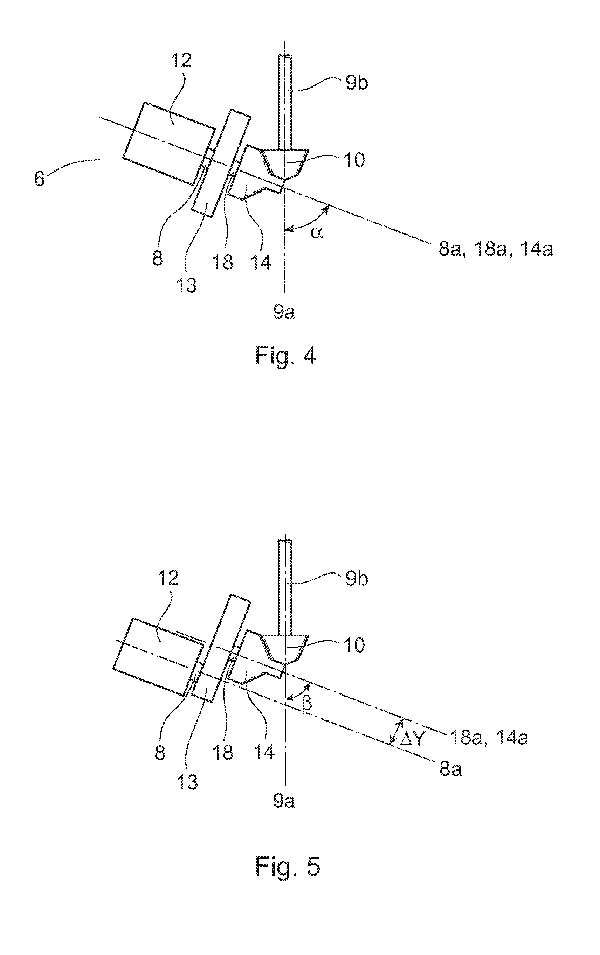

**Figure 4** is a gear transmission 7 and a drive unit 6 in detail, in the vicinity of the first joint 3. The drive unit comprises a motor 12 with a drive shaft 8 and a gear unit 13 with a drive shaft 18. The gear unit 13 is arranged mechanically between and connecting the drive shaft 8 of the motor and a third gear means 14. The drive unit is arranged such that the axis of rotation 8a of the drive shaft 8 coincides with both the axis of rotation 18a of the shaft 18 and the axis of rotation 14a of the third gear means 14. The longitudinal axis 9a of the extended shaft 9 is arranged to make an angle β with the axis of rotation 8a.

**Figure 5** is a gear transmission 7 and a drive unit 6 in detail, in the vicinity of the first joint 3. The drive unit comprises a motor 12 with a drive shaft 8 and a gear unit 13 with a drive shaft 18. The gear unit 13 is arranged mechanically between and connecting the drive shaft 8 of the motor and a third gear means 14 such that the axis of rotation 18a of the shaft 18 and the axis of rotation 14a of the third gear means 14 coincide. The axis of rotation 8a of the drive shaft 8 is arranged with an offset Δy in relation to the two coinciding axis of rotation 18a and 14a, respectively.
The longitudinal axis 9a of the extended shaft 9 is arranged to make an angle α with the axis of rotation 8a, 14a and 18a, respectively.

**Figure 6** is a part of a gear transmission 7 in detail, in the vicinity of the second joint 5.The gear transmission comprises a gear unit 16, which is arranged mechanically between and connecting the fourth gear means 15 and the second robot arm 4. The gear transmission is arranged such that the axis of rotation of the second gear unit 16 coincides with the second axis of rotation II and arranged with an offset Δy in relation to the axis of rotation 15a of the fourth gear means 15.
The longitudinal axis 9a of the extended shaft 9 is arranged to make an angle β with the second axis of rotation II. In Figure 6, the angle β is 90°.

**Figure 7** is a part of a gear transmission 7 and a drive unit 6 in the vicinity of the second joint 5. The motor 12 is arranged such that the axis of rotation 8a of the drive shaft 8a is arranged inclined relative to the first axis of rotation I. The axis of rotation 8a is arranged to make an angle γ with the first axis of rotation I.

## Claims

1. A manipulator comprising a robot part (1) arranged to support a first robot arm (2), the first robot arm (2) is arranged pivoting around a first axis of rotation (I) in a first joint (3) connected to the robot part (1), the first robot arm (2) is arranged to support a second robot arm (4), the second robot arm (4) is arranged pivoting in relation the first robot arm (2) around a second axis of rotation (II) in a second joint (5) attached to the first robot arm (2), and a drive device (6) for pivoting the second robot arm (4) around the second axis of rotation (II), **characterized in that** the drive device (6) is comprised in the first robot arm (2) and arranged in the vicinity of the first joint (3) and that a gear transmission means (7) is arranged to transmit rotational movement of a outgoing drive shaft (8) comprised in the drive device (6) to a pivoting movement of the second arm (4).

2. A manipulator according to claim 1, wherein the first (I) and the second axis of rotation (II) are arranged in parallel.

3. A manipulator according to claim 1 or 2, wherein the gear transmission means (7) comprises an extended shaft (9) with a first gear means (10) arranged in a first end (9b) and a second gear means (11) arranged in a second end (9c) of the extended shaft (9).

4. A manipulator according to claim 3, wherein the longitudinal axis (9a) of the extended shaft (9) is arranged to make an angle (α) with the first (I) and second axis of rotation (II).

5. A manipulator according to claim 4, wherein the angle (α) is 90°.

6. A manipulator according to any of the preceding claims, wherein the axis of rotation (8a) of the drive shaft (8) coincides with the axis of rotation (I) of the first joint (3).

7. A manipulator according to any of the preceding claims 1-5, wherein the axis of rotation (8a) of the drive shaft (8) is arranged with an offset (Δx) in relation to the axis of rotation (I) of the first joint (3).

8. A manipulator according to any of the preceding claims 1-5, wherein the axis of rotation of the motor axle (8a) is arranged inclined relative to the first axis of rotation (I).

9. A manipulator according to claim 3, wherein the transmission means (7) comprises a third gear means (14) arranged meshing with the first gear means (10).

10. A manipulator according to claim 9, wherein the transmission means (7) comprises a first gear unit (13) arranged mechanically between and connecting the drive shaft (8) and the third gear means (14).

11. A manipulator according to claim 3, wherein the transmission means (7) comprises a fourth gear means (15) arranged meshing with the second gear means (11).

12. A manipulator according to claim 11, wherein the fourth gear means (15) is arranged comprised in the second robot arm (4) in the vicinity of the second joint (5).

13. A manipulator according to claim 12, wherein the second axis of rotation (II) coincides with the axis of rotation (15a) of the fourth gear means (15).

14. A manipulator according to claim 12, wherein the axis of rotation (15a) of the fourth gear means (15) is arranged offset (Δy) and in parallel with the second axis of rotation (II).

15. A manipulator according to claim 13, wherein the transmission means (7) comprises a second gear unit (16) is arranged mechanically between and connecting the fourth gear means (15) and the second robot arm (4).
